# EUROPÄISCHE PATENTSCHRIFT

(11) **EP 3 113 308 B1**
(45) Veröffentlichungstag und Bekanntmachung des Hinweises auf die Patenterteilung: **25.10.2017**
(21) Anmeldenummer: 16174553.4
(22) Anmeldetag: 15.06.2016
(51) Int. Cl.: H02G 1/08

(54) **FÄDELHILFE MIT KABELBINDER**
THREADING AID WITH CABLE TIE
MESSAGER COMPRENANT UN COLLIER DE SERRAGE

(30) Priorität: 29.06.2015 DE 102015110448
(43) Veröffentlichungstag der Anmeldung: 04.01.2017
(73) Patentinhaber: Pertramer, Siegfried, 80638 München (DE)
(72) Erfinder: Pertramer, Siegfried, 80638 München (DE)
(74) Vertreter: von Bülow & Tamada

(56) Entgegenhaltungen:
- EP-A2- 2 557 644
- WO-A1-02/17455

## Beschreibung

Die vorliegende Erfindung betrifft einen Fädelkopf für ein an einer Fädelhilfe anbringbares Einführelement mit einem Kabelbinder, das Einführelement, die Fädelhilfe und ein Verfahren zur Herstellung eines Fädelkopfes.

Aus der DE 103 08 997 A1 und der DE 10 2011 109 766 B3 sind je eine Fädelhilfe mit einem Schlauch bekannt, in den ein Kabelsatz einlegbar ist. Mit der Fädelhilfe kann der Kabelsatz in einfacher Weise in einen Kabelschacht eingezogen werden. An den Kopf der Fädelhilfe kann ein Einführelement in Form eines Vorfädeldrahtes angeschlossen werden. An der Spitze des Einführelementes muss sich dabei ein gegenüber dem restlichen Einführelement verdickender Fädelkopf befinden, um ein Verhängen oder Verkanten an Unebenheiten im Kabelschacht zu vermeiden. Derartige Unebenheiten können beispielsweise Riffelungen insbesondere in Kurven des Kabelschachtes oder Blechverschneidungen in Autokarosserien sein, die überwunden werden müssen.

Aus der US 5,480,203 A ist eine Fädelhilfe ohne Vorfädeldraht bekannt. Zur Verwendung dieser Fädelhilfe muss zunächst ein Zugdraht durch den Kabelschacht gezogen werden. An den durch den Kabelschacht gezogenen Zugdraht wird dann die Fädelhilfe über einen Ring angehängt und kann so ebenfalls durch den Kabelschacht gezogen werden.

In der DE 10 2011 109 757 A1 wurde bereits vorgeschlagen, das Einführelement mit einem Kabelbinder aufzubauen, wie er beispielsweise aus der Druckschrift US 2,936,980 Aoder US 2004/0154139 A1 bekannt ist. Dabei soll der Fädelkopf am Kabelbinder verschraubt werden. Wie in dieser Druckschrift ausgeführt wirken auf den Fädelkopf während der Verwendung der Fädelhilfe enorme Zugkräfte, die die Schraubverbindung nicht aushält. Aus diesem Grunde wurde die kostengünstige Herstellung eines Einführelements aus einem Kabelbinder in dieser Druckschrift verworfen. Anmelderseitig wurden die Fädelköpfe bisher aufgeschraubt und mit Metallsplinten gesichert.

Aus der US 2011/0138589 A1 ist die Verwendung einer kabelbinderartigen Zahnstange bekannt, um Fenster oder Türen während eines Transports zu sichern. EP2557644 offenbart einen Fädelkopf für ein an einer Fädelhilfe anbringbares Einführelement, umfassend einen Grundkörper mit einem nach außen geöffneten Aufnahmebereich mit einem in den Aufnahmebereich ragenden und entgegen der Einschubrichtung wirkenden Widerhaken. Es ist Aufgabe der Erfindung, einen Fädelkopf und ein Verfahren zur Herstellung eines Fädelkopfes anzugeben, der eine kostengünstige Verwendung eines Kabelbinders in einer Fädelhilfe zu ermöglicht, wobei dennoch eine Verbindung zwischen dem Kabelbinder und dem Fädelkopf mit einer hohen Zugfestigkeit gewährleistet ist.

Die Aufgabe wird durch die Gegenstände der unabhängigen Ansprüche gelöst. Bevorzugte Weiterbildungen werden mit den Merkmalen der abhängigen Ansprüche angegeben.

Gemäß einem Aspekt der Erfindung, umfasst ein Fädelkopf für ein an einer Fädelhilfe anbringbares Einführelement, das einen Kabelbinder mit einer Zahnstange aufweist, einen Grundkörper mit einem nach außen geöffneten Aufnahmeraum, in den die Zahnstange des Kabelbinders in einer Einschubrichtung einführbar ist und wenigstens einem in den Aufnahmeraum ragenden und entgegen der Einschubrichtung wirkenden Widerhaken zum Verrasten mit der Zahnstange.

Dem angegebenen Fädelkopf liegt die Überlegung zugrunde, dass der Kabelbinder eine Zahnstange aufweist, die bereits alle Voraussetzungen für eine Verbindung mit einer hohen Zugfestigkeit bereitstellt. Es fehlt lediglich an einem entsprechenden Gegenstück im Fädelkopf, das heißt einem entsprechenden Widerhaken, der mit der Zahnstange verrasten und so die zugfeste Verbindung herstellen kann. Daher weist der angegebene Fädelkopf in seinem Grundkörper den Aufnahmeraum auf, in dem der Widerhaken so angeordnet ist, dass er mit der Zahnstange des Kabelbinders verrasten kann, wenn dieser in den Aufnahmeraum eingeführt wird. Auf diese Weise ist bei der Verwendung des Kabelbinders in dem Einführelement eine hohe zugfeste Verbindung zwischen dem Kabelbinder und dem Fädelkopf gegeben.

In einer Weiterbildung umfasst der angegebene Fädelkopf wenigstens einen nach dem Widerhaken angeordneten und entgegen der Einschubrichtung wirkenden weiteren Widerhaken zum Verrasten mit der Zahnstange. Durch den weiteren Widerhaken wird die Zugfestigkeit der Verbindung zwischen dem Fädelkopf und dem Kabelbinder weiter erhöht.

In einer alternativen oder zusätzlichen Weiterbildung umfasst der angegebene Fädelkopf einen Lagerbereich für ein Ende der Zahnstange, der in Einschubrichtung gesehen nach dem Widerhaken ausgebildet ist. Dieser Weiterbildung liegt die Überlegung zugrunde, dass durch den Widerhaken des Fädelkopfes und die Zahnstange des Kabelbinders der Fädelkopf entgegen der Einschubrichtung formschlüssig an den Kabelbinder angebunden wird. In allen anderen, zur Einschubrichtung winkligen Richtungen ist die Verbindung jedoch grundsätzlich lose, so dass der Fädelkopf auf dem Kabelbinder ein großes Bewegungsspiel aufweisen kann. Um dieses Bewegungsspiel einzuschränken ist der Lagerbereich vorhanden, der die Spitze des Kabelbinders in Einschubrichtung vor dem Widerhaken formschlüssig aufnehmen und so die Lage des Fädelkopfes auf dem Kabelbinder stabilisieren kann.

In einer besonderen Weiterbildung des angegebenen Fädelkopfes ist der Grundkörper aus einem Urformteil, wie einem Spritzgußteil, insbesondere aus Kunststoff gefertigt. Durch die Fertigung des angegebenen Fädelkopfes als Urformteil können die Herstellungskosten weiter gesenkt werden, wodurch der kostengünstige Einsatz des Kabelbinders unterstützt wird.

In einer besonderen Weiterbildung umfasst der angegebene Fädelkopf einen winklig zur Einschubrichtung in den Aufnahmeraum führenden Zugangskanal, zum Zuführen eines Werkzeugs, das eingerichtet ist, einen Hinterschnitt für den Widerhaken zu fertigen. Insbesondere wenn der angegebene Fädelkopf als Spritzgussteil hergestellt wird, kann es schwierig sein, den Widerhaken im Aufnahmeraum zu fertigen, weil dieser einen Hinterschnitt aufweist, für dessen Herstellung Spezialwerkzeuge notwendig sein könnten. Der Fädelkopf sollte in Einführrichtung gesehen an der Spitze keine Kanten aufweisen, an denen sich der Fädelkopf im Kabelschacht verhängen könnte. Hier greift die angegebene Weiterbildung mit dem Zugangskanal an, der seitlich in den Aufnahmeraum führt, so dass der Hinterschnitt einerseits ohne Kanten an der Spitze hergestellt und andererseits mit einem Standardwerkzeug, wie beispielsweise einem Schieber bereits beim Urformen einfach gefertigt werden kann.

In einer bevorzugten Weiterbildung des angegebenen Fädelkopfes ist der Widerhaken quer zur Einschubrichtung gesehen dünner ausgebildet, als der Aufnahmeraum. Auch diese Weiterbildung trägt insbesondere zur kostengünstigen Fertigung des Fädelkopfes als Spritzgussteil bei. Weil der Widerhaken dünner ausgebildet ist, als der Aufnahmeraum, ist nach dem Fertigen des Hinterschnittes automatisch ein Spalt zwischen dem Aufnahmeraum und dem Widerhaken vorhanden. Hierdurch kann sich der Widerhaken elastisch im Aufnahmeraum bewegen und so mit der Zahnstange des Kabelbinders verrasten.

In einer besonders bevorzugten Weiterbildung des angegebenen Fädelkopfes ist der Widerhaken blattfederartig ausgeführt. Dies Ausführung unterstützt die elastische Beweglichkeit des Widerhakens und stellt eine gute Verrastbarkeit des Widerhakens mit der Zahnstange bereit, wenn der Kabelbinder in den Aufnahmeraum geschoben wird.

Gemäß einem weiteren Aspekt der Erfindung umfasst ein Einführelement für eine Fädelhilfe einen Kabelbinder mit einem Schloss sowie einer daran befestigten Zahnstange, die zum Bilden eines geschlossenen Bindkörpers in das Schloss einführbar ist, und einen der angegebenen Fädelköpfe, wobei die Zahnstange in den Aufnahmeraum eingeführt und mit dem Widerhaken verrastet ist.

Gemäß einem weiteren Aspekt der Erfindung umfasst eine Fädelhilfe zum Einführen wenigstens eines Kabels in einen Kabelschacht ein angegebenes Einführelement und einen mit dem Kabelbinder verbundenen Schlauch, zum Halten des Kabels.

Gemäß einem weiteren Askept der Erfindung umfasst ein Verfahren zum Herstellen eines Fädelkopfes die Schritte:
- Herstellen eines Grundkörpers mit einer sich in einer Einschubrichtung bereichsweise verjüngenden Aufnahmeöffnung, und
- Herstellen eines winklig zur Einschubrichtung hinter wenigstens einen Teil der Verjüngung in der Aufnahmeöffnung verlaufenden Zugangskanals, derart, dass ein Teil des Zugangskanals mit der Aufnahmeöffnung verbunden ist.

Das angegebene Herstellungsverfahren kann um Herstellungsschritte erweitert werden, die notwendig sind um einen angegebenen Fädelkopf nach einem der Unteransprüche herzustellen.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 einen Kabelschacht mit einem darin aufgenommenen Einführelement einer Fädelhilfe,
Fig. 2 ein Beispiel für die Fädelhilfe aus Fig. 1,
Fig. 3 ein Beispiel für einen Kabelbinder in dem Einführelement aus Fig. 1 und 2,
Fig. 4 ein Beispiel für einen Fädelkopf in dem Einführelement aus Fig. 1 und 2,
Fig. 5 ein weiteres Beispiel für einen Fädelkopf in dem Einführelement aus Fig. 1 und 2,
Fig. 6 ein Beispiel für den Fädelkopf der Fig. 4 oder 5 in einer perspektischen Ansicht,
Fig. 7 der Fädelkopf aus Fig. 7 aus einem anderen Winkel, und
Fig. 8 eine Alternative für den Fädelkopf der Fig. 6 und 7.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

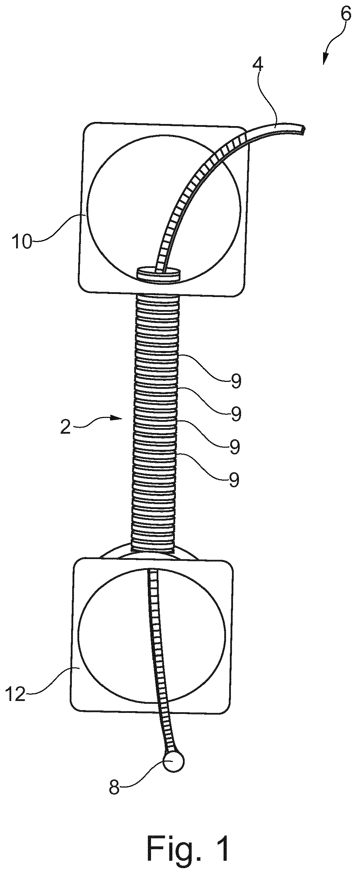

Es wird auf Fig. 1 Bezug genommen, die einen Kabelschacht 2 mit einem darin aufgenommenen Einführelement 4 einer Fädelhilfe 6 zeigt.

Der Kabelschacht 2 führt in praktischen Anwendungen nicht weiter dargestellte elektrische Kabel durch Fahrzeuge, Hauswände oder dergleichen. Mit der Fädelhilfe 6 werden die elektrischen Kabel durch diesen Kabelschacht 2 hindurchgezogen.

Hierzu wird die Fädelhilfe 6 zunächst mit einem Fädelkopf 8 voran an einer Seite 10 des Kabelschachtes 2 in diesen eingeführt und durch diesen hindurch geschoben. Der Kabelschacht 2 weist in der Regel Hindernisse auf, an denen sich die Fädelhilfe 6 beim Durchschieben verhaken oder verkanten kann. Ist der Kabelschacht 2 beispielsweise wie in Fig. 1 gezeigt als Wellenschlauch ausgeführt, so stellen bereits die durch den Wellenschlauch bedingten Furchen 9 ein derartiges Hindernis dar, welches das Verhaken und Verkanten umso wahrscheinlicher macht, wenn der Kabelschacht 2 um Kurven geführt wird. Von den Furchen 9 sind in Fig. 1 der Übersichtlichkeit halber nicht alle mit einem eigenen Bezugszeichen versehen. Auf der anderen Seite muss die Fädelhilfe 6 jedoch elastisch genug ausgebildet sein, um alle Kurven durch den Kabelschacht 2 passieren zu können.

Durch den im Vergleich zum restlichen Einführelement 4 verdickten Fädelkopf 8 wird das Verhaken oder Verkanten einerseits vermieden und andererseits die notwendige Elastizität bereitgestellt. Sobald der Fädelkopf 8 auf der anderen Seite 12 des Kabelschachtes 2 aus diesem austritt kann die Fädelhilfe 6 schließlich durch den Kabelschacht 2 gezogen werden.

Auf der dem Fädelkopf 8 gegenüberliegenden Seite am Einführelement 4 der Fädelhilfe 6 ist ein noch zu beschreibendes Befestigungselement für die durch den Kabelschacht 2 zu ziehenden elektrischen Kabel befestigt. Wenn damit die Fädelhilfe 6 durch den Kabelschacht 2 gezogen wird, werden auch die durch den Kabelschacht 2 zu ziehenden elektrischen Kabel durch diesen gezogen.

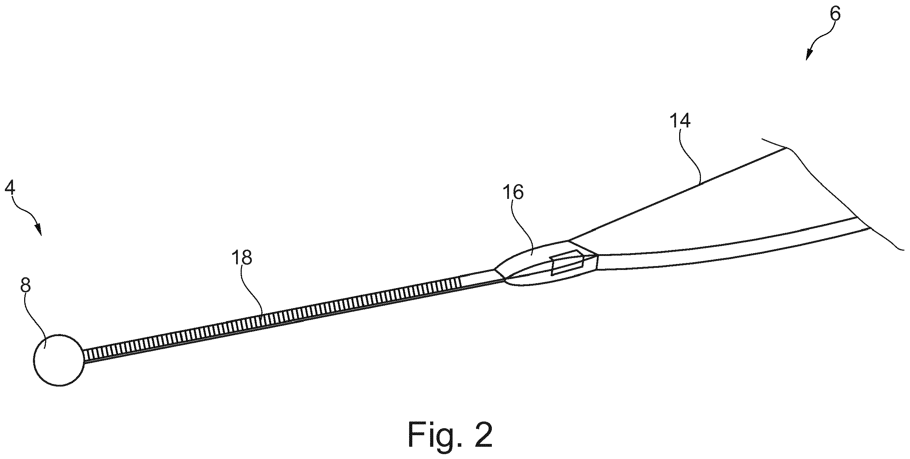

Zum Ziehen der Fädelhilfe 6 bietet der Fädelkopf 8 naturgemäß die beste Angriffsfläche, weshalb der Fädelkopf 8 besonders stabil am restlichen Einführelement 4 befestigt werden sollte. Bevor auf diese stabile Befestigung näher eingegangen wird, soll zunächst die Fädelhilfe 6 anhand von Fig. 2 näher erläutert werden.

Die Fädelhilfe 6 umfasst das Einführelement 4 mit dem Fädelkopf 8. An der dem Fädelkopf 8 gegenüberliegenden Seite des Einführelementes 4 ist das weiter oben genannte Befestigungselement in Form eines Schlauches 14 angebracht. Der Schlauch 14 kann grundsätzlich beliebig ausgeführt sein. Mögliche Beispiele sind in der DE 103 08 997 A1 offenbart, weshalb zu Details hierzu auf diese Druckschrift verwiesen wird.

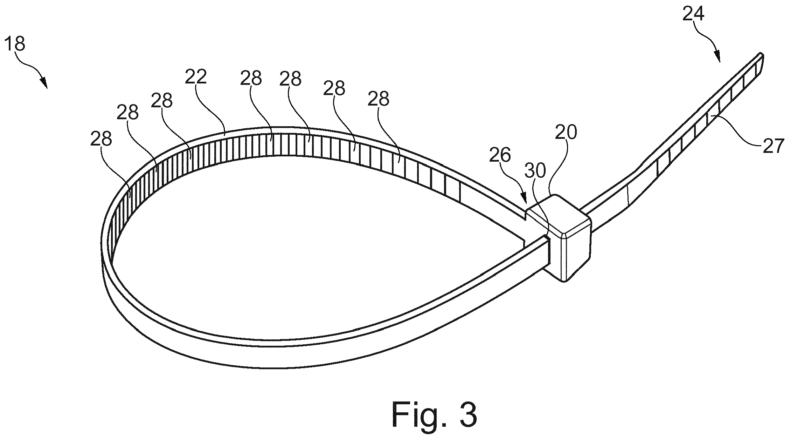

Der Schlauch 14 ist über ein Verbindungselement 16 an das Einführelement 4 angeschlossen. Wie später noch eingehender erläutert, wird der Schlauch 14 im Einführelement 4 über einen Kabelbinder 18 mit dem Fädelkopf 8 verbunden. Ein in Fig. 3 zu sehendes Schloss 20 des Kabelbinders 18 kann dabei in das Verbindungselement 16 eingelegt und der Schlauch 14 so gemäß dem in der EP 2 556 999 A2 offenbarten Wirkprinzip an das Einführelement 4 angebunden werden.

Der Fädelkopf 8 kann abschließend auf den Kabelbinder 18 aufgesteckt werden. Bevor hierauf näher eingegangen wird, soll der Kabelbinder 18 zunächst anhand der Fig. 3 näher erläutert werden.

In Fig. 3 weist der Kabelbinder 18 eine Zahnstange 22 zwischen einem Kopfende 24 und einem dem Kopfende 24 gegenüberliegenden Fußende 26 auf. Am Fußende 26 ist das Schloss 20 ausgebildet, während am Kopfende 24 ein als Riffelung ausgeführter Griffbereich 27 ausgebildet sein kann. Die Zahnstange 22 weist eine Vielzahl parallel verlaufender Zähne 28 auf, von denen in Fig. 3 der Übersichtlichkeit halber nicht alle mit einem Bezugszeichen versehen sind.

Das Schloss 20 weist eine Durchgangsöffnung 30 auf, durch die das Kopfende 24 winklig zur Zahnstange 22 geführt werden kann. Auf diese Weise kann der Kabelbinder 18, wie in Fig. 3 gezeigt, zu einem geschlossenen Bindkörper zusammengesetzt werden, der beispielsweise ein Kabelbündel zusammenhält. Innerhalb des Schlosses 20 ist ein nicht weiter zu sehendes Rastelement vorhanden. Wird das Kopfende 24 und anschließend die Zahnstange 22 durch die Durchgangsöffnung 30 geführt und durchgezogen, dann verrasten die Zähne 28 mit diesem Rastelement und verhindern, dass sich Zahnstange 22 wieder aus dem Schloss herausbewegen kann.

Weitere Details zum Funktionsprinzip des Kabelbinders 18 können beispielsweise der US 2,936,980 A entnommen werden.

Auf den in Fig. 3 gezeigten Kabelbinder 18 wird zur Herstellung des Einführelementes 4 der Fädelkopf 8 kopfendenseitig 24 aufgesetzt, wobei ein fester Halt zwischen dem Kabelbinder 18 und dem Fädelkopf 8 über die Zahnstange 22 hergestellt wird. Hierzu wird der optionale Griffbereich 27 zunächst abgeschnitten.

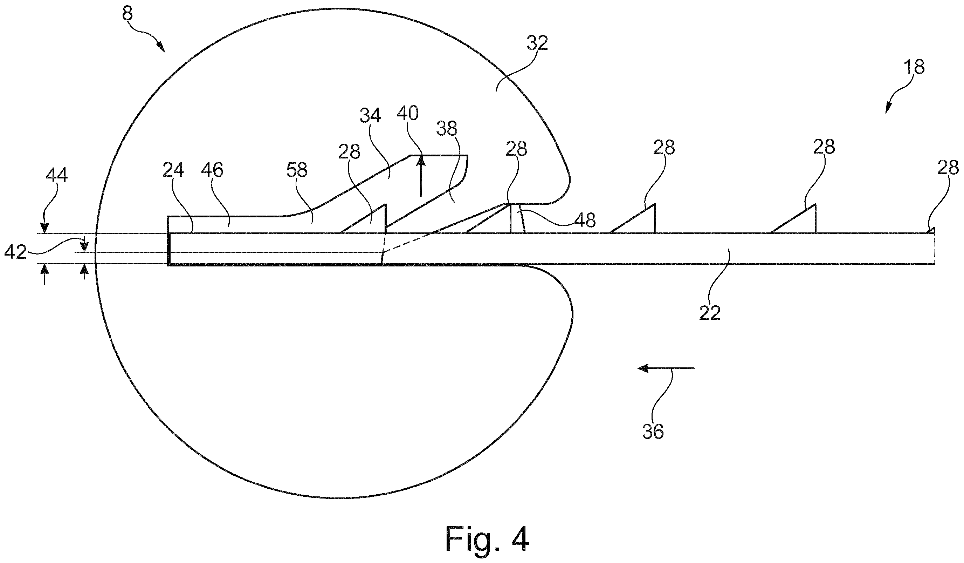

Anschließend wird der Fädelkopf 8, wie in Fig. 4 gezeigt, auf das Kopfende 24 des Kabelbinders 18 aufgesetzt, was nachstehend im einzelnen erläutert werden soll.

Der Fädelkopf 8 weist einen Grundkörper 32 auf, in dem ein Aufnahmeraum 34 ausgebildet ist. In diesen Aufnahmeraum 34 wird das Kopfende 24 des Kabelbinders 18, nachdem gegebenenfalls der Griffbereich 27 abgeschnitten wurde, in einer Einschubrichtung 36 eingeführt.

In den Aufnahmeraum 34 erstreckt sich ein Widerhaken 38, der entgegen der Einschubrichtung 36 wirkt. Wird der Kabelbinder 18 mit dem Kopfende 24 in den Aufnahmeraum 34 eingeschoben, so verrastet der Widerhaken 38 mit einem der Zähne 28 auf der Zahnstange 22 des Kabelbinders 18, so dass sich der Kabelbinder 18 nicht mehr aus dem Aufnahmeraum 34 herausziehen lässt.

Für eine hohe Stabilität sollte der Widerhaken 38 den Kabelbinder 18 zusätzlich gegen eine Wand des Aufnahmeraumes 34 drücken. Hierzu ist der Widerhaken 38 blattfederartig ausgeführt. Beim Einschieben des Kabelbinders 18 in den Aufnahmeraum 34 wird der Widerhaken 38 so aus einer in Fig. 4 angedeuteten Ausgangslage 40 in eine Federrichtung 40 winklig zur Einschubrichtung 36 verschoben. Nachdem der Widerhaken 38 mit dem entsprechenden Zahn 28 der Zahnstange 22 verrastet ist, federt er entgegen der Federrichtung 40 wieder in seine Ausgangslage 40 zurück. Ist eine Dicke 44 des Kabelbinders 18 nun so groß, dass der Widerhaken 38 seine Ausgangslage 42 nicht mehr erreichen kann, dann drückt der Widerhaken 38 den Kabelbinder 18 gegen die Wand des Aufnahmeraumes 34.

Um die Stabilität weiter zu verbessern, kann zusätzlich im Aufnahmeraum 34 ein Lagerbereich 46 ausgebildet sein. Der Lagerbereich 46 ist in Einschubrichtung 36 gesehen hinter dem Widerhaken 38 ausgebildet und nimmt das Kopfende 24 des Kabelbinders 18 mindestens winklig zur Einschubrichtung 36 wirkend formschlüssig auf. Dieser Formschluss schränkt ein Bewegungsspiel des Fädelkopfes 8 auf dem Kopfende 24 des Kabelbinders 18 weiter ein in verbessert so die Stabilität.

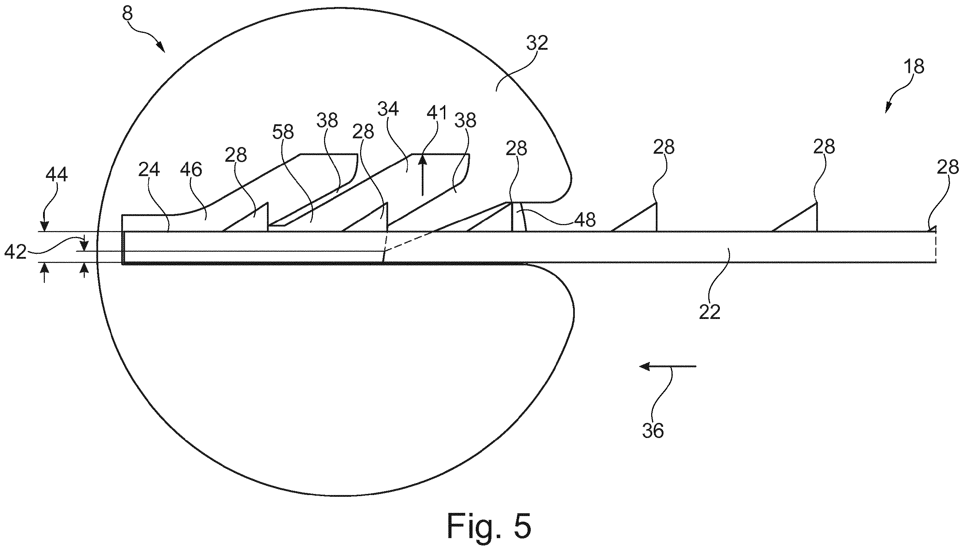

Zur weiteren Steigerung der Stabilität können je nach Möglichkeit beliebig viele Widerhaken 38 in dem Aufnahmeraum 34 angeordnet werden. Dies ist in Fig. 5 angedeutet, in dem der Fädelkopf 8 beispielhaft mit zwei Widerhaken 38 ausgeführt ist.

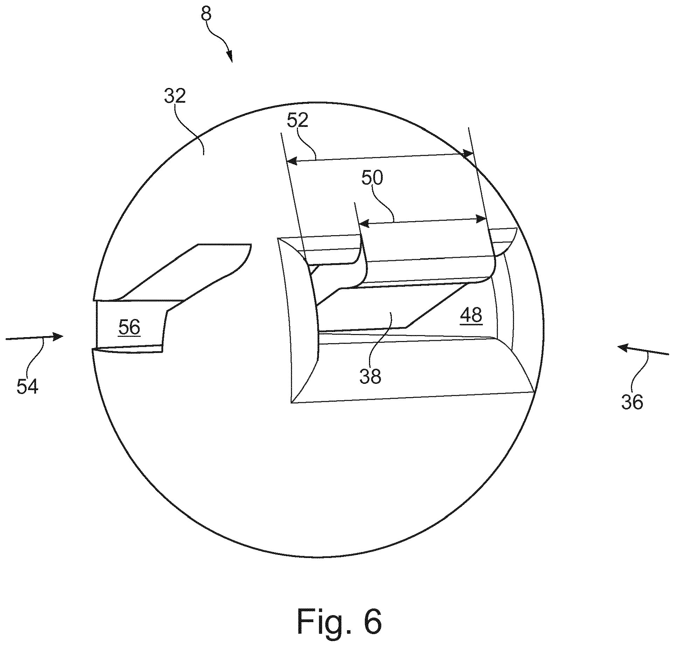

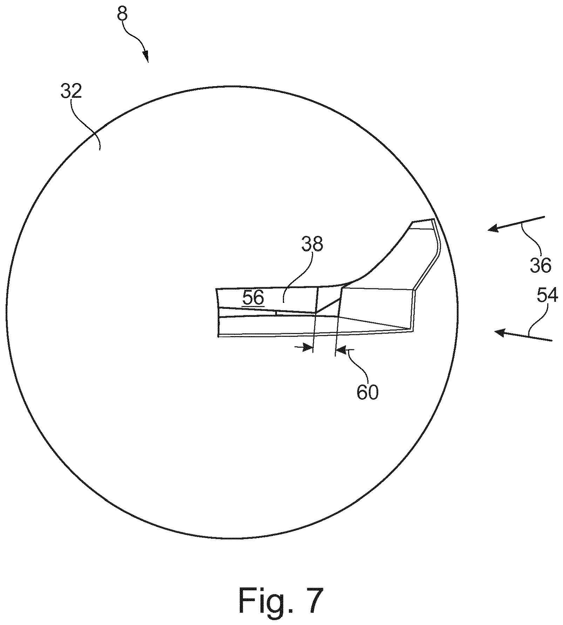

Abschließend soll ein Herstellungsverfahren zum Fertigen des Fädelkopfes 8 erläutert werden. In Fig. 6 und 7 ist der Fädelkopf 8 in zwei verschiedenen perspektivischen Ansichten gezeigt.

Zur Herstellung des Grundkörper 32 kann ein Urformverfahren wie Spritzgiesen oder Sintern verwendet werden. Vorzugsweise ist der Grundkörper 32 als Spritzgussteil beispielsweise aus Kunststoff gefertigt, weil der Kabelbinder 18 in der Regel ebenfalls aus Kunststoff gefertigt ist.

Eine den Grundkörper 32 definierende und nicht weitere dargestellte Urform-Form kann dabei die Außenseite des Grundkörpers und einen Vorraum 48 definieren, der den gesamten Aufnahmeraum 34 umfasst, der sich in Einschubrichtung 36 gesehen vor dem vordersten Widerhaken 38 befindet.

Zusätzlich sollte die Urform-Form derart ausgebildet sein, dass in Einschubrichtung 36 gesehen, eine Vorderseite des Widerhakens 38 derart ausgeführt wird, dass eine Widerhakenbreite 50 des Widerhakens 38 quer zur Einschubrichtung 36 schmaler ist, als eine Aufnahmeraumbreite 52 des Aufnahmeraums 34. Dabei ist der Widerhaken 38 über die Aufnahmeraumbreite 52 gesehen mittig im Aufnahmeraum 34 angeordnet.

Zusätzlich kann in einer winklig zur Einschubrichtung 36 führenden Zugangsrichtung 54 ein nicht weiter gezeigter beweglicher Schieber in der Urform-Form aufgenommen sein, der einen Zugangskanal 56 in den Grundkörper 32 einformt. Dabei wird der Schieber so tief in die Urform-Form und damit den Grundkörper 32 eingeführt, dass gleichzeitig mit dem Einformen des Zugangskanals 56 ein in Fig. 4 und 5 angedeuteter Rückraum 58 des Aufnahmeraumes 34 ausgebildet wird, der sich in Einschubrichtung 36 gesehen hinter dem Widerhaken 38 befindet. Auf diese Weise wird ein der oben genannten Vorseite des Widerhakens 38 gegenüberliegender Hinterschnitt des Widerhakens gefertigt, der im Rahmen des Urformverfahren durch die Urform-Form allein nicht herstellbar ist.

Wie aus Fig. 7 ersichtlich sorgt die zuvor erwähnte schmalere Ausführung de Widerhakens 38 gegenüber dem Aufnahmeraum 34 dafür, dass der Widerhaken 38 automatisch um einen Abstand 60 von der Wand des Aufnahmeraumes 34 beabstandet ist, und sich auf den zuvor beschriebenen Fertigungsschritt hin unmittelbar in der Federrichtung 40 bewegen kann.

Daher kann der so hergestellte Fädelkopf 8 unmittelbar auf das Kopfende 24 des Kabelbinders 18 aufgesetzt und in der Fädelhilfe 6 verwendet werden.

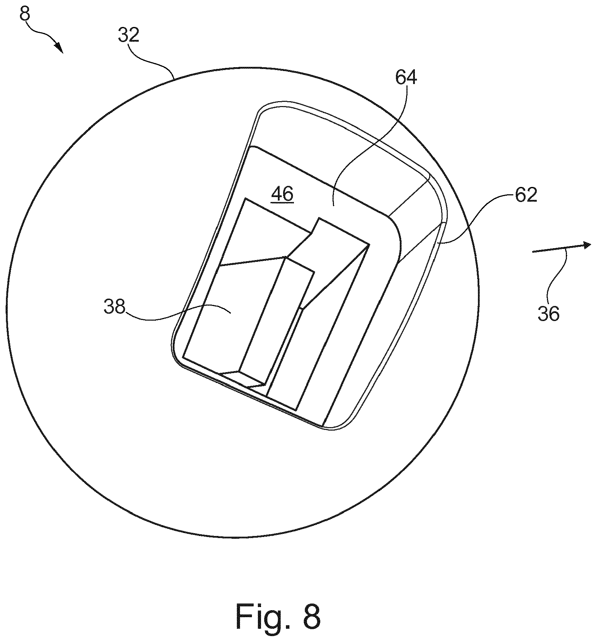

Eine Alternative, den Lagerbereich 46 auszubilden, ist in Fig. 8 dargestellt. Hierbei wird der Grundkörper 32 in Einschubrichtung 36 gesehen auf der dem Vorraum 48 gegenüberliegenden Seite geöffnet, anstatt den zuvor genannten Zugangskanal 56 und damit den Rückraum 54 über den Schieber auszubilden. Auf diese Weise kann der Hinterschnitt am Widerhaken 38 mit nur einer einzigen Urform-Form gefertigt werden ohne dass ein Schieber notwendig ist.

Eine in diesem Fall in die Einschubrichtung 36 gerichtete Kante 62 könnte jedoch im Kabelschacht 2 zu den oben genannten, zu vermeidenden Verkantungen oder Verhakungen führen. Deshalb sollte der Vorraum 48 in dem in Fig. 8 gezeigten Beispiel mit einem nicht gezeigten Deckel verschlossen werden, der auf der dem Vorraum gerichteten Außenseite die Kugelform des Grundkörpers 32 weiterführt.

Für einen stabilen Halt und eine klar definierte Position des Deckels im Grundkörper 32 kann in diesem eine Halteschulter 64 ausgebildet sein, auf der der Deckel in einer der Einschubrichtung 36 entgegen gerichteten Richtung aufgelegt werden kann. Damit der Deckel stets gegen die Halterschulter 64 gedrückt wird, wenn der Fädelkopf 2 auf Hindernisse im Kabelschacht 2 stößt, sollte die Halteschulter 64 umlaufend ausgeführt sein.

## Patentansprüche

1. Fädelkopf (8) für ein an einer Fädelhilfe (6) anbringbares Einführelement (4), das einen Kabelbinder (18) mit einer Zahnstange (22) aufweist, umfassend einen Grundkörper (32) mit einem nach außen geöffneten Aufnahmeraum (34), in den die Zahnstange (22) in einer Einschubrichtung (36) einführbar ist und wenigstens einem in den Aufnahmeraum (34) ragenden und entgegen der Einschubrichtung (36) wirkenden Widerhaken (38) zum Verrasten mit der Zahnstange (22), wobei der Grundkörper (32) aus einem Spritzgußteil, insbesondere aus Kunststoff gefertigt ist..

2. Fädelkopf (8) nach Anspruch 1, umfassend wenigstens einen nach dem Widerhaken (38) angeordneten und entgegen der Einschubrichtung (36) wirkenden weiteren Widerhaken (38) zum Verrasten mit der Zahnstange (22).

3. Fädelkopf (8) nach Anspruch 1 oder 2, umfassend einen Lagerbereich (46) für ein Ende (24) der Zahnstange (22), der in Einschubrichtung (36) gesehen nach dem Widerhaken (38) ausgebildet ist.

4. Fädelkopf (8) nach einem der vorstehenden Ansprüche, umfassend einen winklig zur Einschubrichtung (36) in den Aufnahmeraum (34) führenden Zugangskanal (56), zum Zuführen eines Werkzeugs, das eingerichtet ist, einen Hinterschnitt für den Widerhaken (38) zu fertigen.

5. Fädelkopf (8) nach einem der vorstehenden Ansprüche, wobei der Widerhaken (38) quer zur Einschubrichtung (36) gesehen dünner ausgebildet ist, als der Aufnahmeraum (34).

6. Fädelkopf (8) nach einem der vorstehenden Ansprüche, wobei der Widerhaken (38) blattfederartig ausgeführt ist.

7. Einführelement (4) für eine Fädelhilfe (6) umfassend einen Kabelbinder (18) mit einem Schloss (20) sowie einer daran befestigten und Zahnstange (22), die zum Bilden eines geschlossenen Bindkörpers in das Schloss (20) einführbar ist, und einem Fädelkopf (8) nach einem der vorstehenden Ansprüche, wobei die Zahnstange (22) in den Aufnahmeraum (34) eingeführt und mit dem Widerhaken (38) verrastet ist.

8. Fädelhilfe (6) zum Einführen wenigstens eines Kabels in einen Kabelschacht (2), umfassend ein Einführelement (4) nach Anspruch 7 und einen mit dem Kabelbinder (18) verbundenen Schlauch (14), zum Halten des Kabels.

9. Verfahren zum Herstellen eines Fädelkopfes (8) nach einem der Ansprüche 1 bis 6, umfassend:
- Herstellen eines Grundkörpers (32) mit einer sich in einer Einschubrichtung (36) bereichsweise verjüngenden Aufnahme öffnung (48), und
- Herstellen eines winklig zur Einschubrichtung (36) hinter wenigstens einen Teil der Verjüngung in der Aufnahmeöffnung (48) verlaufenden Zugangskanals (56, 58), derart, dass ein Teil des Zugangskanals (56, 58) mit der Aufnahmeöffnung (48) verbunden ist.

## Claims

1. Feeding head (8) for an insertion element (4) that is attachable to a feeding aid (6) and that includes a cable strap (18) with a toothed rack (22), comprising a main body (32) with an outwardly opened receiving space (34) into which the toothed rack (22) is insertable in an insertion direction (36) and with at least one barb (38) protruding into the receiving space (34) and effecting against the insertion direction (36) for mechanically catching with the toothed rack (22), wherein the main body (32) is fabricated of a molded piece, in particular of plastic.

2. Feeding head (8) according to claim 1, comprising at least one further barb (38) located behind the barb (38) and effecting against the insertion direction (36) for mechanically catching with the toothed rack (22).

3. Feeding head (8) according to claim 1 or 2, comprising a bearing area (46) for one end (24) of the toothed rack (22) that is seen in the insertion direction (36) formed behind the barb (38).

4. Feeding head (8) according to one of the preceding claims, comprising an access channel (56) leading angular to the insertion direction (36) into the receiving space (34) for guiding a tool that is adapted to form an undercut for the barb (38).

5. Feeding head (8) according to one of the preceding claims, wherein, seen in the insertion direction (35), the barb (38) is formed thinner than the receiving space (34).

6. Feeding head (8) according to one of the preceding claims, wherein the barb (38) is formed like a flat spring.

7. Insertion element (4) for a feeding aid (6) comprising a cable strap (18) with a lock (20) as well as a tooth rack (22) mounted and thereon that is insertable into the lock (20) for forming a closed tie body, and a feeding head (8) according to one of the preceding claims, wherein the tooth rack (22) is inserted into the receiving space (34) and mechanically catched with the barb (38).

8. Feeding aid (6) for inserting a cable into a cable duct (2) comrpsing an insertion element (4) according to claim 7 and a hose (14) connected to the cable strap (18) for holding the cable.

9. Method for producing a feeding head (8) according to one of the claims 1 to 6, comprsing:
- fabricating a main body (32) with a receiving opening (48) that diminishes at least partly in the insertion direction (36), and
- fabricating a access channel (56, 58) that runs angular to the insertion direction (36) behind at least a part of the diminution in the receiving opening (48) in a way that a part of the access channel (56, 58) is connected with the receiving opening (48).

## Revendications

1. Tête d'enfilage (8) pour un élément d'enfilage (4) pouvant être monté sur une tige d'enfilage (6), comportant un serre-câble (18) avec une crémaillère (22), comprenant un corps de base (32) ayant un espace de réception (34) ouvert vers l'extérieur dans lequel la crémaillère (22) peut être engagée selon une direction d'insertion (36) et au moins un barbillon (38) faisant saillie dans l'espace de réception (34) et orienté à l'encontre de la direction d'insertion (36) pour verrouiller la crémaillère (22), dans laquelle le corps de base (32) est constitué d'une pièce moulée par injection, en particulier en matière plastique.

2. Tête d'enfilage (8) selon la revendication 1, comprenant au moins un barbillon supplémentaire (38) disposé derrière le barbillon (38) et orienté en opposition avec la direction d'insertion (36) pour verrouiller la crémaillère (22).

3. Tête d'enfilage (8) selon la revendication 1 ou 2, comprenant une partie de palier (46) pour une extrémité (24) de la crémaillère (22), laquelle partie de palier s'étendant dans la direction d'insertion (36) jusqu'au barbillon (38).

4. Tête d'enfilage (8) selon l'une quelconque des revendications précédentes, comprenant un angle par rapport à la direction d'insertion (36) dans le canal d'accès (56) conduisant dans l'espace de réception (34), pour le guidage d'un outil adapté pour réaliser une contre dépouille pour les barbillons (38).

5. Tête d'enfilage (8) selon l'une quelconque des revendications précédentes, dans laquelle, transversalement par rapport à la direction d'insertion (36), le barbillon (38) est formé plus mince que l'espace de réception (34).

6. Tête d'enfilage (8) selon l'une quelconque des revendications précédentes, dans laquelle le barbillon (38) est structuré comme un ressort à lame.

7. Élément d'insertion (4) pour une tige d'enfilage (6), comprenant une attache de câble (18) avec un verrou (20) ainsi qu'un joint qui lui est adapté et une crémaillère (22) qui peut être introduite dans le verrou (20) pour former un corps de liaison fermé, et une tête d'insertion (8) selon l'une quelconque des revendications précédentes, dans lequel la crémaillère (22) pénètre dans l'espace de réception (34) et est en prise avec le barbillon (38).

8. Tige d'enfilage (6) pour l'enfilage d'au moins un câble dans un conduit de câble (2), comprenant un élément d'insertion (4) selon la revendication 7 et un tube (14) qui est lié avec l'attache de câble (18) pour retenir le câble.

9. Procédé pour la fabrication d'une tête d'enfilage (8) selon l'une quelconque des revendications 1 à 6, comprenant :
- prévoir un corps de base (32) ayant une ouverture de réception (48) partiellement conique dans une direction d'insertion (36), et
- réaliser un angle par rapport à la direction d'insertion (36) derrière au moins une partie du cône s'étendant dans le canal d'accès (56, 58) dans l'ouverture de réception (48), de telle sorte qu'une partie du canal d'accès (56, 58) est reliée à l'ouverture de réception (48).
